Europäisches Patentamt

European Patent Office

Office européen des brevets

(11) Numéro de publication: **0 379 810**
**A2**

## (12) DEMANDE DE BREVET EUROPEEN

(21) Numéro de dépôt: 89402672.3

(22) Date de dépôt: 28.09.89

(51) Int. Cl.5: **G09G 3/36, H04N 3/12, G02F 1/1347**

(30) Priorité: 30.09.88 FR 8812810

(43) Date de publication de la demande:
01.08.90 Bulletin 90/31

(84) Etats contractants désignés:
CH DE FR GB IT LI NL

(71) Demandeur: **COMMISSARIAT A L'ENERGIE ATOMIQUE**
**31/33, rue de la Fédération**
**F-75015 Paris(FR)**

(72) Inventeur: **Dijon, Jean**
**Les Faysses**
**F-38800 Champagnier(FR)**
Inventeur: **Leroux, Thierry**
**19 Mail M. Cachin**
**F-38600 Fontaine(FR)**

(74) Mandataire: **Mongrédien, André et al**
**c/o BREVATOME 25, rue de Ponthieu**
**F-75008 Paris(FR)**

(54) **Procédé d'affichage de niveaux de gris sur un écran d'affichage du type matriciel.**

(57) Procédé d'affichage de niveau de gris sur un écran d'affichage matriciel, tel par exemple qu'un écran à cristaux liquides ferroélectriques à phase smectique chirale comportant une cellule enfermant le cristal munie sur ses parois de deux systèmes matriciels de i conducteurs lignes et de j conducteurs colonnes à angle droit, les différents pixels de l'image étant définis par les croisements superposés de ces conducteurs, caractérisé en ce que l'on réalise chaque pixel à l'aide de p sous-pixels indépendants ayant chacun son coefficient de transmission propre, dont chacun est susceptible d'afficher plusieurs états de gris fondamentaux différents, noir et blanc compris, et l'on affiche, sur chacun des p sous-pixels l'un des états de gris précédents, en tenant compte, pour chacun d'entre eux, de sa transmission propre, de façon à obtenir pour chaque pixel, par addition visuelle des contributions de chaque sous-pixels, l'affichage de la nuance de gris convenable, la plus proche de la valeur analogique indiquée par le signal vidéo d'écriture.

EP 0 379 810 A2

## PROCEDE D'AFFICHAGE DE NIVEAUX DE GRIS SUR UN ECRAN D'AFFICHAGE DU TYPE MATRICIEL

La présente invention a pour objet un procédé d'affichage de niveaux de gris sur un écran matriciel, c'est-à-dire dans lequel l'image affichée est constituée de la juxtaposition de différents pixels répartis selon les lignes et les colonnes d'une matrice et adressés par un ensemble de conducteurs lignes et de conducteurs colonnes.

Elle s'applique notamment aux écrans à cristaux liquides ferroélectriques à phase smectique chirale fonctionnant par transmission, aux écrans électroluminescents fonctionnant par émission, et, plus spécialement, aux écrans à micropointes.

Pour des raisons de commodité d'exposé, la description qui suit sera faite en se référant principalement au cas des écrans d'affichage à cristaux liquides ferroélectriques, mais il est bien entendu que ceci n'est pas limitatif et que, notamment, l'homme de métier pourra transposer facilement et sans effort inventif nouveau les moyens ainsi décrits à tout autre type d'écran tel que, par exemple, les écrans émissifs à micropointes.

Pour les mêmes raisons, on parlera par commodité d'états blanc ou noir de chaque pixel, par référence à ce qui se présente effectivement avec les écrans transmissifs. Dans le cas des écrans émissifs, comme les écrans photoluminescents à micropointes, il faudra entendre par là respectivement l'état d'émission maximale et l'état d'absence d'émission d'un pixel déterminé.

L'invention s'applique tout particulièrement aux techniques de l'opto-électronique, à la télévision et à l'affichage binaire (ou analogique) d'images complexes ainsi qu'à l'affichage de caractères alpha-numériques. Elle concerne d'abord bien entendu l'affichage en noir et blanc mais également l'affichage d'images en couleur ainsi qu'on le verra dans la suite du présent texte.

Bien que l'invention s'applique à tout type de cristaux liquides chiraux smectiques C, I, F, G, H inclinés (Tilted en terminologie anglosaxonne) celle-ci se rapporte plus spécialement aux cristaux liquides à phase smectiques C chirale.

Pour l'exposé de la présente invention, on considèrera comme connue de l'homme de métier la constitution des écrans d'affichage à cristaux liquides ferroélectriques tels qu'ils sont notamment décrits dans les documents EP-A-0092181 et EP-A-0032362. On se dispensera d'en décrire ici les caractéristiques détaillées, en se contentant de rappeler qu'un écran d'affichage à cristal liquide comporte généralement deux polariseurs croisés entre lesquels est disposée une cellule enfermant le cristal et munie sur ses parois de deux systèmes matriciels de i conducteurs de lignes et de j conducteurs de colonnes à angle droit, les différents pixels de l'image étant définis par les croisements de ces conducteurs superposés. On rappellera encore, ce qui est fondamental pour la compréhension de la présente invention, que les cristaux liquides ferroélectriques utilisés jusqu'à ce jour présentent pour la plupart un état bistable permettant une commutation du noir au blanc (ou inversement) sous la dépendance du champ électrique appliqué en chaque point du cristal à partir de la différence de potentiel V établie par le conducteur de la ligne et le conducteur de la colonne afférentes à ce pixel. La commutation d'un état à l'autre est effective lorsque le produit Vt de la tension V appliquée en chaque point par le temps t pendant lequel elle est appliquée dépasse une valeur de seuil $(Vt)_{seuil}$.

Le problème que résout la présente invention est celui de l'écriture d'un certain nombre de nuances ou de niveaux de gris sur une image en noir et blanc étant entendu que, ainsi qu'on vient de le rappeler, les cellules d'affichage à cristaux liquides ferroélectriques ne permettent de réaliser des nuances de gris qu'à partir d'un mélange de surfaces opaques (noir) ou totalement transmissives (blanc).

Le problème de l'inscription par un tel écran d'un certain nombre de nuances de gris intermédiaires entre le noir et le blanc est un problème sur lequel se sont déjà penchés les chercheurs et le point de la situation en ce domaine peut être considéré comme assez bien exposé d'une part par le document CONFERENCE RECORDS OF THE 1985 INTERNATIONAL DISPLAY RESEARCH CONFERENCE, San Diego, California, 15-17 octobre 1985, pages 215 à 220 ainsi que par le document EP-A-0 219 479 des mêmes auteurs.

Selon cet état connu de la technique, il existe essentiellement trois méthodes envisagées jusqu'à ce jour pour réaliser, par mélange d'états blancs et d'états noirs, des écritures de gris sur un écran à cristal liquide ferroélectrique.

La première de ces méthodes consiste à réaliser un certain nombre d'états dont chacun a son seuil de commutation propre. Ceci est réalisable soit en utilisant des cristaux liquides ferroélectriques à plusieurs états stables, ce que l'on commence tout juste à savoir faire, soit en réalisant sur un pixel plusieurs domaines d'épaisseurs différentes. De toute façon, les technologies utilisant des solutions de ce type sont de mise en oeuvre très difficile.

Une autre solution également indiquée par les documents précédents consiste à associer ensemble plusieurs sous-pixels voisins de surface différente. En combinant ainsi le coefficient de transmission proportionnel à la surface de chacun d'entre eux avec l'affichage noir ou blanc on peut obtenir un nombre de niveaux de gris déjà plus élevé. A titre d'exemple, si l'on subdivise chaque pixel en quatre sous-pixels dont les surfaces sont dans les rapports 1, 2, 4 et 8, on constitue ainsi une base d'affichage binaire qui permet par combinaison des surfaces précédentes et des deux états noir et blanc, l'affichage de 16 niveaux de gris différents. Toutefois, le nombre de niveaux de gris que l'on peut ainsi obtenir est de $2^n$, si chaque pixel comporte n sous-pixels. Le résultat obtenu est donc relativement modeste si l'on considère l'accroissement de complexité qui en résulte pour l'écran et le fait qu'un nombre sensiblement plus élevé de niveaux de gris est nécessaire pour parvenir à afficher un nombre suffisant de nuances bien réparties entre le noir et le blanc.

Une troisième solution réside dans ce que l'on peut appeler la création d'une échelle de gris temporelle, dans laquelle les gris sont obtenus en séparant chaque trame en au moins deux parties, à savoir une partie pendant laquelle on écrit un état noir et une autre pendant laquelle on écrit un état blanc. Cette façon de faire produit bien entendu un gris résultant, conséquence de la persistance rétinienne des informations captées par l'oeil. Cette méthode nécessite malheureusement des écrans adressés par des circuits de commande très rapides si l'on veut réaliser un nombre de gris acceptable. En effet, le nombre n de sous-trames nécessaires pour afficher $2^m$ niveaux de gris est théoriquement tel que $m \leq n \leq 2^m$, avec dans la pratique n très peu différent de $2^m$. L'égalité précédente montre que, si l'on veut par cette méthode afficher 16 niveaux de gris, c'est-à-dire si m est égal à 4 avec une cadence de signal vidéo égale à celle de la télévision, c'est-à-dire 64 microsecondes par ligne, on ne dispose que de 4 microsecondes pour afficher une ligne ce qui est à la limite de la faisabilité.

En résumé on peut donc dire qu'il n'existe pas à l'heure actuelle de technique disponible et de mise en oeuvre facile pour afficher, dans de bonnes conditions, une image comportant des gris nuancés sur un écran d'affichage par cristaux liquides ferroélectriques.

La présente invention a précisément pour objet un procédé d'affichage de niveau de gris sur un écran à cristaux liquides ferroélectriques qui permet avec des moyens de mise en oeuvre correspondant aux possibilités offertes par l'électronique et l'informatique actuelle, l'écriture d'un nombre important de niveaux de gris sur un écran à cristal liquide.

Ce procédé d'affichage de niveaux de gris sur un écran à cristaux liquides ferroélectriques à phase smectique chirale comportant une cellule enfermant le cristal et associée à des moyens de polarisation linéaires, munie sur ses parois de deux systèmes matriciels de i conducteurs lignes et de j conducteurs colonnes à angle droit, les différents pixels de l'image étant définis par les croisements superposés de ses conducteurs, la commutation du noir au blanc (ou inversement) de chaque pixel étant sous la dépendance du champ électrique E appliqué sur ce pixel à partir de la différence de potentiel V établie pendant un temps t entre le conducteur ligne et le conducteur colonne afférents à ce pixel, cette commutation étant effective dès lors que le produit Vt dépasse une valeur de seuil $(Vt)_{seuil}$ fonction des paramètres géométriques et diélectriques de la cellule, l'écriture de l'écran ayant lieu pour chaque trame ou image séquentiellement ligne à ligne, la ligne i étant ouverte à l'écriture par un signal de ligne appliqué pendant le temps durant lequel les signaux d'écriture, correspondant à l'état noir ou blanc de chaque pixel de cette ligne, sont transmis simultanément par l'ensemble des j conducteurs colonnes de la matrice, se caractérise en ce que l'on réalise chaque pixel à l'aide de p sous-pixels indépendants ayant chacun son coefficient de transmission propre, dont chacun est susceptible d'afficher plusieurs états de gris fondamentaux différents, noir et blanc compris, et en ce que l'on affiche, sur chacun des p sous-pixels l'un des états de gris précédents, en tenant compte pour chacun d'entre eux de sa transmission propre, de façon à obtenir pour chaque pixel, par addition visuelle des contributions de chaque sous-pixel, l'affichage de la nuance de gris convenable, la plus proche de la valeur indiquée par le signal vidéo d'écriture.

L'originalité du procédé objet de l'invention résulte comme on le voit du fait que l'on combine les avantages d'un pixel divisé en p sous-pixels indépendant dont chacun a son coefficient de transmission propre avec le fait que chacun des sous-pixels est susceptible d'afficher un certain nombre d'états de gris fondamentaux différents prédéterminés. C'est ensuite, en combinant les contributions de chaque sous-pixel à la fois par son état de gris et par son coefficient de transmission propre que l'on obtient pour chaque pixel, en faisant appel aux possibilités d'un calculateur, la nuance de gris la plus proche de la valeur analogique idéale indiquée par le signal vidéo d'écriture. En jouant sur les différents coefficients de transmission de chaque sous-pixel, ainsi que sur l'échelle des états de gris fondamentaux que chacun d'eux peut prendre, on peut ainsi calculer, dans chaque cas particulier, les combinaisons de ces deux éléments qui permettront de s'approcher au plus près de la valeur analogique du signal vidéo.

Selon l'invention, deux moyens sont utilisables pour attribuer à chaque sous-pixel un coefficient de transmission propre.

Le premier d'entre eux consiste à attribuer ce coefficient de transmission propre à chaque sous-pixel en choisissant sa surface dans le pixel dont il fait partie, les p sous-pixels d'un pixel déterminé pouvant alors avoir des surfaces différentes.

Le second moyen utilisable à cet effet consiste à ajuster à la valeur voulue le coefficient de transmission d'un sous-pixel en obscurcissant une partie au moins de sa surface. Cette technique est notamment préférable lorsque, pour réaliser un sous pixel ayant un coefficient de transmission relativement faible, on serait amené à le réaliser avec une surface faible, que les techniques de gravures actuelles ne permettraient pas d'obtenir avec certitude. Il est alors plus facile de partir d'une surface plus grande que l'on obscurcit partiellement.

Selon un mode de mise en oeuvre perfectionné du procédé précédent, chaque sous-pixel est obtenu par découpage des conducteurs électrodes de lignes et/ou de colonnes formant ainsi des sous-lignes et/ou des sous-colonnes d'adressage, les surfaces de chacun de ces p sous-pixels constituant, à partir de la plus petite prise comme unité, une progression géométrique de raison $(n+1)$, chacun des p sous-pixels étant susceptible d'afficher $(n+1)$ niveaux de gris fondamentaux équidistants, noir et blanc compris, à partir desquels on construit l'un des $(n+1)^p$ états de tris (noir et blanc compris) affichables sur chaque pixel de l'écran.

En cherchant en effet à optimiser le procédé expliqué plus haut dans sa généralité la plus grande, le demandeur a trouvé qu'il était spécialement intéressant de constituer les sous-pixels par des surfaces dont les valeurs, à partir de la plus petite prise comme unité, soient en progression géométrique de raison $n+1$, et de concevoir le système d'adressage pour qu'il soit en mesure d'afficher sur chacun des p sous-pixels $(n+1)$ niveaux de gris fondamentaux équidistants noir et blanc compris, ce qui permet par association des transmissions propres de chaque pixel en surface et en niveau de gris, la réalisation de $(n+1)^p$ états de gris sur chaque pixel de l'écran.

Parallèlement il est également intéressant de réaliser chaque sous-pixel par découpage des conducteurs électrodes de lignes et/ou de colonnes, c'est-à-dire, en fait, à partir de sous-lignes et/ou de sous-colonnes d'adressage.

Selon l'invention, on réalise l'affichage des $(n+1)$ niveaux de gris fondamentaux de chaque sous-pixel par affichage successif, sur ce sous-pixel, de l'un des deux états fondamentaux noir ou blanc au cours de n sous-trames, de façon que la sensation visuelle résultant à la fin de chaque trame soit précisément celle d'un des $(n+1)$ niveaux précédents recherchés.

On voit ainsi que c'est au niveau de chaque sous-pixel et lors de chacune des n sous-trames que l'un des deux états fondamentaux noir ou blanc est écrit, permettant ainsi d'obtenir à volonté sur chaque sous-pixel, l'un des $(n+1)$ niveaux de gris fondamentaux équidistants nécessaires à la mise en oeuvre du procédé.

Selon une variante du procédé précédent, on réalise l'affichage des $(n+1)$ niveaux de gris fondamentaux de chaque sous-pixel en donnant à chacun d'entre eux n domaines d'épaisseur propre conférant à chaque domaine un seuil de commutation noir et blanc, $(Vt)_{seuil}$ différent de celui de ses voisins, l'état de gris de chaque sous-pixel étant alors fonction de la différence de potentiel V appliquée au cristal de ce sous-pixel.

Enfin, selon une autre variante l'affichage de ces mêmes $(n+1)$ niveaux de gris fondamentaux pour chaque sous-pixel est réalisé en utilisant pour la cellule un cristal liquide à n états stables de commutation.

Selon un perfectionnement du procédé objet de l'invention, on évite le papillotement résultant de l'affichage d'une zone de gris. A cet effet, on remplace les séquences de sous-trames affichant tous les sous-pixels des pixels de cette zone à l'état blanc dans une sous-trame d'ordre k, et à l'état noir dans la sous-trame d'ordre $(k+1)$, par deux sous-trames répartissant spatialement et temporellement les informations en écrivant chaque pixel à la nuance de gris recherchée au cours de deux sous-trames, par mélange des sous-pixels blancs et des sous-pixels noirs, de façon qu'un sous-pixel blanc au cours de la première sous-trame soit noir au cours de la deuxième et vice versa.

Cette façon de procéder est spécialement intéressante lorsqu'une zone de gris uniforme d'une certaine ampleur et durable dans le temps est affichée sur l'écran. En effet, si l'on ne prenait pas de mesure particulière, une telle situation conduirait à avoir pour tous les sous-pixels des pixels de cette zone des successions de sous-trames d'état noir et d'état blanc, ce qui réalise objectivement les conditions idéales pour l'apparition du phénomène de papillotement dû au fait qu'au cours d'une même sous-trame l'oeil est en mesure de percevoir l'affaiblissement spontané de l'état noir et son évolution vers un gris en raison de l'ampleur spatiale et temporelle du phénomène. Le mode d'écriture résultant de la caractéristique précédente du procédé permet de pallier ce risque en assurant pour tous les sous-pixels de cette zone une transmission moyenne constante dans le temps et dans l'espace, ce qui supprime précisément le papillotement.

La présente invention a également pour objet un écran à cristal liquide pour l'affichage de niveaux de gris selon les procédés précédents dont les structures sont définies selon trois modes particuliers.

Selon le premier mode de réalisation d'un tel écran, les sous-pixels de chaque pixel sont adressés par une seule ligne (ou colonne) et plusieurs sous-colonnes (ou sous-lignes) ; autrement dit, la division de chaque pixel en sous-pixels résulte elle-même de la division de l'un des deux conducteurs électrodes de ligne ou de colonne.

Selon un deuxième mode de mise en oeuvre, les p sous-pixels de chaque pixel résultent de la division simultanée des lignes en sous-lignes et des colonnes en sous-colonnes, chaque pixel étant alors adressé par x sous-lignes et y sous-colonnes, avec bien entendu xy = p.

Enfin, selon un troisième mode souvent intéressant de mise en oeuvre de l'invention, l'écran à cristal liquide est réalisé par le fait que l'un des deux types de conducteurs (sous-lignes ou sous- colonnes) est modulé périodiquement en largeur, de façon à réaliser, par croisement avec les conducteurs de l'autre type (colonnes ou lignes) les différentes surfaces des p sous-pixels de chaque pixel.

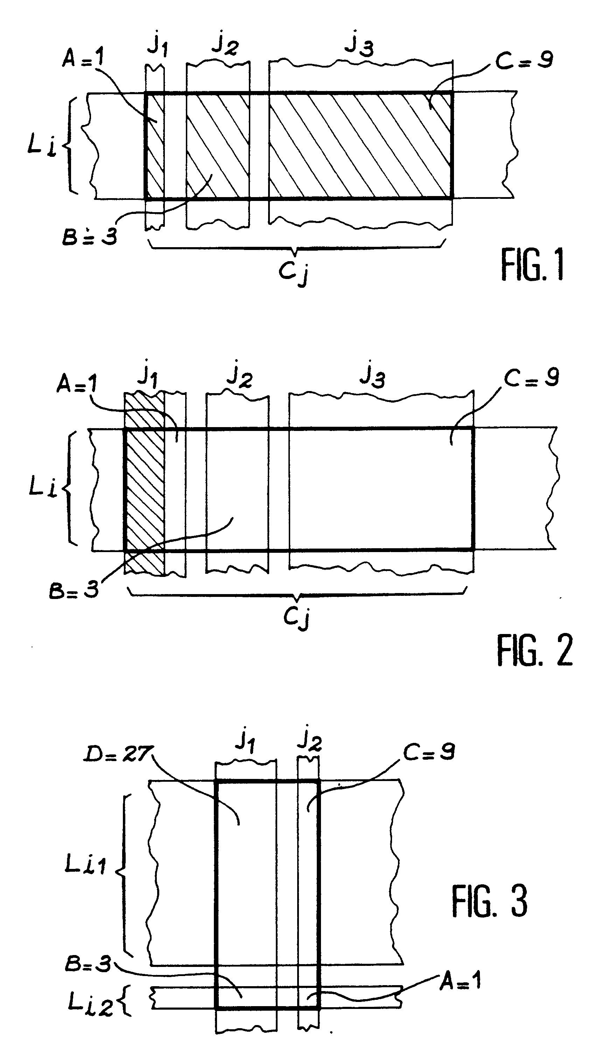

De toute façon l'invention sera mieux comprise en se référant à la description qui suit de plusieurs exemples de mise en oeuvre du procédé d'affichage de niveaux de gris sur un écran à cristaux liquides ferroélectriques. Cette description sera faite en se référant aux figures 1 à 7 ci-jointes, sur lesquelles :

- la figure 1 montre un exemple de mise en oeuvre de l'invention sur un pixel divisé en trois sous-pixels ;

- la figure 2 montre un pixel de même constitution dans lequel l'un des sous-pixels comporte une zone obscurcie ;

- la figure 3 montre un autre exemple de réalisation avec un pixel divisé en 4 sous-pixels ;

- la figure 4 montre un exemple possible d'affichage en couleur en utilisant le procédé objet de l'invention ;

- les figures 5a, 5b, 6a et 6b expliquent les problèmes de papillotement lors de l'écriture d'un gris uniforme de grande surface ainsi que la solution apportée dans le cadre de l'invention ;

- la figure 7 illustre un exemple de réalisation particulière d'un écran à deux sous-pixels par pixel ;

- les figures 8a et 8b illustrent schématiquement un exemple d'application de l'invention à une structure d'écran d'affichage à micropointes.

Avant de décrire quelques exemples de mise en oeuvre de l'invention, on commencera par expliquer, sur un cas particulier, la méthode préconisée pour la réalisation des (n + 1) niveaux de gris fondamentaux sur chaque sous-pixel.

Comme indiqué précédemment, un mode de réalisation préféré du procédé objet de l'invention fait descendre au niveau du sous-pixel et de la sous-trame l'affichage des deux seuls états fondamentaux possibles pour un cristal liquide ferroélectrique bistable, (à savoir le blanc et le noir. Conformément à l'invention, chaque trame d'affichage de temps T (de l'ordre de 20 millisecondes dans les signaux vidéo de télévision) est divisée en n sous-trames ayant chacune une durée $T' = T/n$. C'est au cours de chaque sous-trame que chaque sous-pixel peut être affiché en noir ou en blanc et que l'on constitue ainsi les niveaux de gris équidistants par mélange, sur chaque sous-pixel, de n états d'affichage dont chacun est soit blanc, soit noir. La persistance des impressions rétiniennes fait que l'oeil, en fin de trame perçoit une nuance grise résultant globalement du mélange d'états noir et d'états blanc affichés successivement pendant cette trame sur le sous-pixel considéré.

Comme pendant chaque sous-trame, chaque sous-pixel est soit blanc soit noir, on conçoit que par combinaison de n états binaires noirs ou blancs, on constitue ainsi la possibilité d'obtenir (n + 1) niveaux de gris équidistants, c'est-à-dire dont les nuances sont en progression arithmétique entre le noir total qui correspond à la transmission 0 et le blanc total qui correspond à la transmission 1.

Le tableau I suivant, qui est relatif à un exemple d'affichage d'un sous-pixel au cours de trois sous-trames (n = 3), montre les valeurs de transmission des quatre niveaux de gris (n + 1 = 4) obtenus par ce procédé et permet de comprendre le principe de l'association des états noirs et blancs sur un même sous-pixel pour obtenir les (n + 1) états de gris fondamentaux et équidistants recherchés.

TABLEAU I

| 3 sous-trames | 4 nuances résultantes |
|---|---|
| N N N | 0 |
| N N B | 1/3 |
| N B N | |
| B N N | |
| N B B | 2/3 |
| B N B | |
| B B N | |
| B B B | 1 |

Sur le tableau I, on a représenté à chaque fois les trois séquences temporelles possibles pour les états 1/3 et 2/3, étant bien entendu que dans la réalité on se contente de l'une d'entre elles, puisqu'elles sont, au moins en théorie, équivalentes pour l'oeil. On remarquera également que l'on obtient bien quatre nuances (n + 1 = 4) de gris dont la nuance 0 c'est-à-dire le noir et la nuance 1 c'est-à-dire le blanc et que celles-ci sont en progression arithmétique de raison 1/3 entre 0 et 1, c'est-à-dire équidistantes.

En généralisant l'exemple précédent, on voit facilement qu'à l'aide de n de sous-trames au cours desquelles on affiche les états blancs et les états noirs sur chaque sous-pixel, il est possible d'afficher sur chacun de ceux-ci (n + 1) nuances de gris fondamentaux équidistantes.

En se référant maintenant à la figure 1, on va décrire un mode d'organisation d'un pixel comportant trois sous-pixels A, B et C, dont les surfaces sont en progression géométrique de raison 3. Autrement dit, si l'on prend A comme surface unitaire, la surface de B = 3 unités et la surface de C = 9 unités. Dans l'exemple de la figure 1, les trois sous-pixels A, B et C sont réalisés à partir d'une même ligne i et à partir de trois sous-colonnes j1, j2 et j3. Si l'on met en oeuvre le pixel ainsi constitué dans un procédé à deux sous-trames (n = 2), l'invention enseigne que l'on peut ainsi obtenir $(n + 1)^p = 3^3 = 27$ états de gris fondamentaux. Ce résultat peut être vérifié de la façon suivante.

Chacun des sous-pixels A, B et C ne pouvant être affiché que deux fois (une fois au cours de chaque sous-trame) n'est susceptible que de prendre les trois états de gris fondamentaux 0, 1/2 et 1. Si l'on pondère maintenant la participation de chacun de ces sous-pixels A, B et C en fonction de sa surface de transmission, il est clair que sa contribution au poids propre du gris affiché sur le pixel (A + B + C) au cours d'une trame correspond aux chiffres indiqués sur le tableau II ci-joint.

TABLEAU II

| A | B | C |
|---|---|---|
| 0 | 0 | 0 |
| 1/2 | 3/2 | 9/2 |
| 1 | 3 | 9 |

En mélangeant trois par trois (p = 3) les transmissions du tableau II à chaque fois selon deux séquences correspondant à chacune des deux sous-trames, on constitue ainsi comme on le voit facilement la suite des états de gris 0, 1, 2, 3, ..., 26 correspondant bien aux 27 états de gris équidistants fondamentaux annoncés, noir et blanc compris. C'est ce que montre le tableau III ci-après, dans lequel on a indiqué les états sélectionnés au cours des deux sous-trames pour chacun des sous-pixels A, B, C pour réaliser la suite des gris 0, 1, 2, 3, ..., 26 correspondant bien à 27 états équidistants. Dans la pratique, il est clair que le choix des différentes séquences d'affichage est fait par le calculateur en fonction du résultat que l'on veut afficher pour chaque pixel.

6

TABLEAU III

| | | |
|---|---|---|
| 1è sous-trame | A0 B0 C0 | |
| 2è sous-trame | A0 B0 C0 | --→ 0 |
| 1è sous-trame | A1 B0 C0 | |
| 2è sous-trame | A0 B0 C0 | --→ 1 |
| 1è sous-trame | A1/2 B3/2 C0 | |
| 2è sous-trame | A0 B0 C0 | --→ 2 |
| 1è sous-trame | A0 B3 C0 | |
| 2è sous-trame | A0 B0 C0 | --→ 3 |
| 1è sous-trame | A1 B3 C9 | |
| 2è sous-trame | A1 B3 C9 | --→ 26 |

En se référant maintenant à la figure 2, on décrira une constitution de pixel comparable à celle de la figure 1, c'est-à-dire comportant 3 sous-pixels de surface de transmission respective 1, 3 et 9 constitués à partir d'une même ligne i et de 3 sous-colonnes j1, j2 et j3 de la colonne j. Dans l'exemple particulier de la figure 2, le pixel de surface de transmission unitaire a été réalisé à partir d'une sous-colonne j1 de même largeur que la sous-colonne j2 mais que l'on a obscurci par exemple à l'aide d'un dépôt de métal tel que le chrome d'une épaisseur de 1500 Å, sur les deux tiers de sa surface. Cette façon de procéder est parfois plus simple lorsque la surface unitaire devait être trop petite il est difficile de l'obtenir uniquement par les procédés de gravure connus.

En se référant maintenant à la figure 3, on va décrire un exemple particulièrement intéressant de mise en oeuvre de l'invention dans lequel chaque pixel est divisé en 4 sous-pixels A, B, C, D dont les surfaces sont en progression géométrique de raison 3 et de valeur respective par conséquent 1, 3, 9 et 27. Un tel pixel est facilement réalisable en divisant chaque ligne en deux sous-lignes i1 et i2 et chaque colonne en deux sous-colonnes j1 et j2 ainsi que le montre la figure. Si l'on utilise un affichage à deux sous-trames, on obtient alors $p = 4$, $n = 2$, $(n + 1) = 3$ et le nombre de gris affichables sur chaque pixel est de $(n + 1)^p = 3^4 = 81$. Ce nombre est suffisant pour obtenir une palette de gris permettant un affichage déjà très nuancé d'une image vidéo, avec une réalisation d'écran relativement facile à obtenir par gravure. Dans l'exemple précédent, les 81 niveaux de gris distincts correspondent respectivement aux coefficients 0, 1, 2, 3, ..., 80, suite d'états dans lesquels l'état 0 désigne le blanc et l'état 80 le noir.

Une remarque intéressante doit être faite pour des structures d'écran dans lesquelles chaque pixel est découpé en un nombre de sous-pixels p qui est un nombre premier. Dans ce cas, il n'est pas possible de réaliser l'adressage de ces p sous-pixels à l'aide d'un système de sous-lignes et de sous-colonnes, mais on peut néanmoins réaliser l'écran par exemple de la façon suivante. La mise en oeuvre du procédé de l'invention conduit à réaliser une matrice de (p-1) sous-pixels par pixel (puisque p-1 dans ce cas n'est plus premier) en associant le pième sous-pixel d'un pixel donné avec son homologue du pixel immédiatement adjacent.

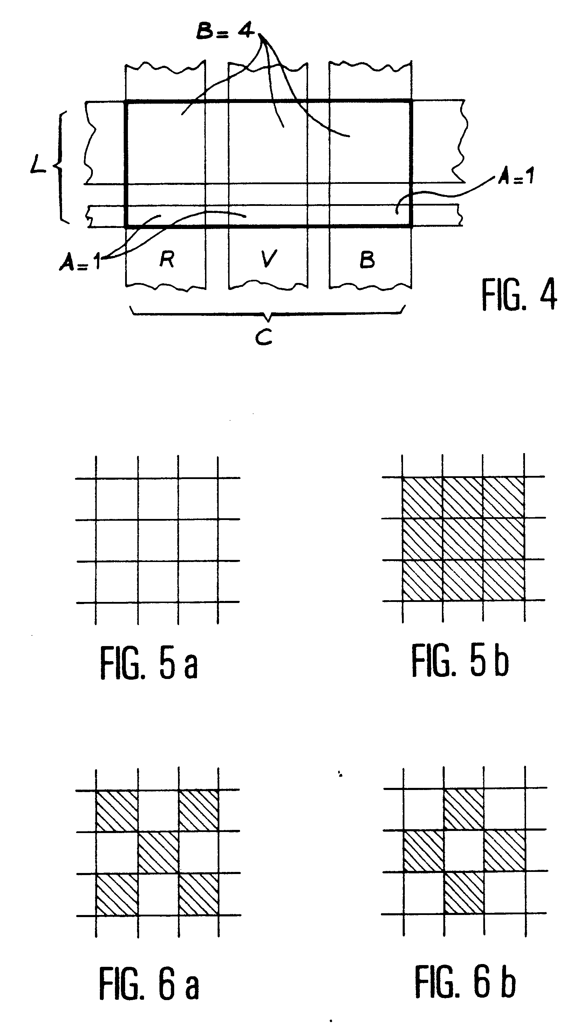

En se référant maintenant à la figure 4, on va expliquer comment on peut réaliser l'affichage d'une image en couleur à l'aide du procédé objet de l'invention. Un affichage en couleur peut être réalisé d'une façon générale et de manière classique, en superposant à une matrice de pixels noirs, blancs et gris, une matrice de filtres de couleurs respectivement rouge, vert et bleu. La figure 4 est relative au cas particulier de trois pixels adjacents, divisés chacun en deux sous-pixels ($p = 2$) de rapport de surface 1 et 4 ($n + 1 = 4$). Si l'on superpose des filtres de couleurs rouge, vert, bleu en affectant chacun d'entre eux à l'un des trois pixels précédents, on obtient un ensemble susceptible d'afficher $(n + 1)^p = 4^2 = 16$ niveaux de gris pour chacune des trois couleurs fondamentales rouge, vert et bleu. Dans l'exemple qui précède, un pixel de couleur nécessite par conséquent l'association de trois pixels de l'écran noir et blanc correspondant.

En se référant aux figures 5a, 5b, 6a et 6b, on va examiner maintenant les problèmes de papillotement qui peuvent perturber le bon fonctionnement d'un écran d'affichage utilisant le procédé objet de l'invention, lorsque, ce qui est fréquent dans les transmissions d'images, une surface relativement importante de l'écran doit afficher et conserver un certain temps une zone de gris uniforme. Dans ce cas en effet, certains sous-pixels des pixels de la zone concernée sont amenés à afficher l'état tout blanc (figure 5a) pendant une sous-trame d'ordre k et l'état tout noir (figure 5b) durant la sous-trame suivante d'ordre k + 1. Il en résulte pour l'observateur, si la surface concernée a une certaine dimension, une sensation de papillotement à la moitié de la fréquence sous-trame.

Pour pallier cette difficulté, à chaque fois qu'une séquence blanc/noir ou noir/blanc doit être appliquée à un sous-pixel au cours de deux sous-trame dans une série de n trames, on répartit temporellement et spatialement les informations des deux sous-trames précédentes en écrivant, comme cela est visible sur les figures 6a et 6b, chaque pixel à la nuance de gris recherchée, en mélangeant les sous-pixels blancs et les sous-pixels noirs de façon qu'un sous-pixel blanc au cours de la première sous-trame devienne noir au cours de la deuxième sous-trame et vice versa. Cette façon de procéder, que le calculateur de pilotage de l'adressage peut facilement réaliser, fait disparaître le papillotement en assurant une transmission moyenne spatiale et temporelle constante dans la zone considérée. S'il subsiste alors un certain papillotement résiduel, il est à la fréquence de trame 1/T.

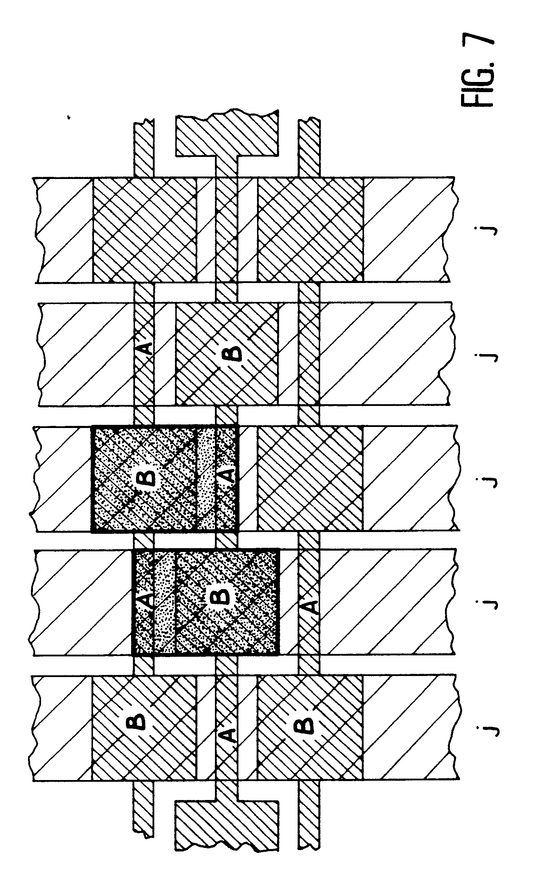

Sur la figure 7, on a décrit un mode particulièrement intéressant de réalisation d'un écran d'affichage à cristaux liquides pour la mise en oeuvre du procédé objet de l'invention. Dans cet écran, chaque pixel est divisé en deux sous-pixels dont les surfaces A et B sont dans le rapport 1 à 5, les deux sous-pixels ayant la largeur de chacune des colonnes j de l'écran et une longueur modulée périodiquement selon des dimensions variant de 1 à 5 et réalisées par les conducteurs-lignes qui sont eux-mêmes ainsi modulés en largeur. Ainsi qu'on le voit dans cet exemple, la structure des sous-pixels est obtenue par croisement entre des colonnes de largeur constante et des lignes de longueur variable une fois sur deux au niveau des croisements avec les colonnes.

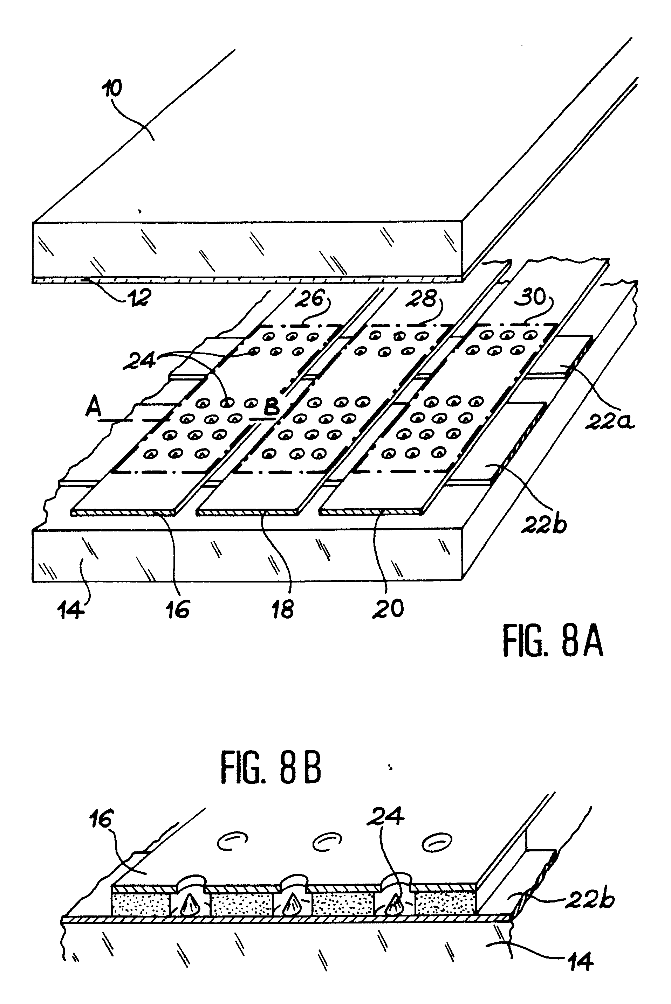

L'invention peut s'appliquer également aux écrans fluorescents à micropointes. Dans ce cas, représenté sur les figures 8a et 8b, chaque pixel est découpé en p sous-pixels indépendants ayant chacun son coefficient d'émission propre et dont chacun est susceptible d'afficher plusieurs états de gris différents.

Sur la figure 8a, on voit entre deux substrats "supérieur" 10 portant la couche de phosphore 12 et "inférieur" 14 portant les conducteurs de lignes 16, 18 et 20 et les conducteurs de colonne 22, les micropointes 24, constituant les pixels disposés selon un réseau matriciel.

La figure 8b montre, à plus grande échelle sur une coupe partielle de la figure 8a selon un plan vertical A-B, la structure connue d'un tel écran.

Dans l'exemple de la figure 8a, le conducteur de colonne 22 est composé de deux sous-conducteurs 22a et 22b de largeurs différentes, ce qui conduit chacun des pixels 26, 28 et 30 à être divisé en deux sous-pixels de surfaces différentes. Les différents niveaux de gris sur les sous-pixels, nécessaires à la mise en oeuvre du procédé selon l'invention, peuvent être obtenus en faisant varier la différence de potentiel appliquée à leurs bornes ou la durée d'application de celle-ci.

## Revendications

1. Procédé d'affichage de niveaux de gris sur un écran matriciel comportant une juxtaposition de pixels adressés par un ensemble de conducteurs de lignes et de conducteurs de colonnes, caractérisé en ce que l'on constitue chaque pixel à l'aide de p sous-pixels pouvant avoir des surfaces différentes dont chacun est susceptible d'afficher plusieurs états de gris fondamentaux différents, noir et blanc compris, et l'on affiche, sur chacun des p sous-pixels l'un des états de gris précédents, en tenant compte, pour chacun d'entre eux, de sa surface propre, de façon à obtenir pour chaque pixel, par addition visuelle des contributions de chaque sous-pixels, l'affichage de la nuance de gris convenable, la plus proche de la valeur analogique indiquée par le signal vidéo d'écriture.

2. Procédé d'affichage selon la revendication 1, caractérisé en ce que chaque sous-pixel est obtenu par découpage des électrodes de lignes et/ou de colonnes formant ainsi des sous-lignes et/ou des sous-colonnes d'adressage, les surfaces de chacune de ces p sous-pixels constituant, à partir de la plus petite prise comme unité, une progression géométrique de raison (n + 1), chacun des p sous-pixels étant susceptible d'afficher (n + 1) niveaux de gris fondamentaux équidistants, noir et blanc compris, à partir desquels on construit l'un des $(n + 1)^p$ états de gris (noir et blanc compris) affichable sur chaque pixel de l'écran, l'affichage des (n + 1) niveaux de gris fondamentaux de chaque sous-pixel étant réalisé par affichage successif, sur ce sous-pixel, de l'un des deux états fondamentaux noir ou blanc au cours de n sous-trames, de façon que la sensation visuelle résultante à la fin de chaque trame soit précisément celui des (n + 1) niveaux précédents recherché.

3. Procédé d'affichage de niveaux de gris sur un écran à cristaux liquides ferroélectriques à phase smectique chirale comportant une cellule enfermant le cristal associée à des moyens de polarisation, munie sur ses parois de deux systèmes matriciels de i conducteurs lignes et de j conducteurs colonnes à angle droit, les différents pixels de l'image étant définis par les croisements superposés de ces conducteurs, la commutation du noir au blanc (ou inversement) de chaque pixel étant sous la dépendance du champ électrique E appliqué sur ce pixel à partir de la différence de potentiel V établie pendant un temps t entre le conducteur ligne et le conducteur colonne afférents à ce pixel, cette commutation étant effective dès lors que le produit Vt dépasse une valeur de seuil $(Vt)_{seuil}$ fonction des paramètres géométriques et diélectriques de la cellule, l'écriture de l'écran ayant lieu pour chaque trame ou image séquentiellement ligne à ligne, la ligne i étant ouverte à l'écriture par un signal de ligne appliqué pendant le temps durant lequel les signaux d'écriture, correspondant à l'état noir ou blanc de chaque pixel de cette ligne, sont transmis simultanément par l'ensemble des j conducteurs colonnes de la matrice, caractérisé en ce que l'on réalise chaque pixel à l'aide de p sous-pixels indépendants ayant chacun son coefficient de transmission propre, dont chacun est susceptible d'afficher plusieurs états de gris fondamentaux différents, noir et blanc compris, et l'on affiche, sur chacun des p sous-pixels l'un des états de gris précédents, en tenant compte, pour chacun d'entre eux, de sa transmission propre, de façon à obtenir pour chaque pixel, par addition visuelle des contributions de chaque sous-pixels, l'affichage de la nuance de gris convenable, la plus proche de la valeur indiquée par le signal vidéo d'écriture.

4. Procédé d'affichage selon la revendication 3, caractérisé en ce que l'on attribue le coefficient de transmission propre de chaque sous-pixel en choisissant sa surface, les p sous-pixels d'un pixels déterminé pouvant avoir des surfaces différentes.

5. Procédé d'affichage selon l'une quelconque des revendications 3 et 4, caractérisé en ce que le coefficient de transmission de l'un au moins des sous pixels est ajusté à la valeur voulue par obscurcissement d'une partie de sa surface.

6. Procédé d'affichage selon l'une quelconque des revendications 3 à 5 précédentes, caractérisé en ce que chaque sous-pixel est obtenu par découpage des conducteurs de lignes et/ou de colonnes formant ainsi des sous-lignes et/ou des sous-colonnes d'adressage, les surfaces de chacun de ces p sous-pixels constituant, à partir de la plus petite prise comme unité, une progression géométrique de raison (n + 1), chacun des p sous-pixels étant susceptible d'afficher (n + 1) niveaux de gris fondamentaux équidistants, noir et blanc compris, à partir desquels on construit l'un des $(n + 1)^p$ états de gris (noir et blanc compris) affichable sur chaque pixel de l'écran.

7. Procédé d'affichage selon l'une quelconque des revendications 3 et 6, caractérisé en ce que l'on réalise l'affichage des (n + 1) niveaux de gris fondamentaux de chaque sous-pixel par affichage successif, sur ce sous-pixel, de l'un des deux états fondamentaux noir ou blanc au cours de n sous-trames, de façon que la sensation visuelle résultante à la fin de chaque trame soit précisément celui de l'un des (n + 1) niveaux précédents recherché.

8. Procédé d'affichage selon l'une quelconque des revendications 3 et 6, caractérisé en ce que l'on réalise l'affichage des (n + 1) niveaux de gris fondamentaux de chaque sous-pixel en donnant à chacun d'entre eux n domaines d'épaisseur propre conférant à chaque domaine un seuil de commutation noir et blanc, $Vt_{seuil}$ différent de celui de ses voisins, l'état de gris de chaque sous pixel étant alors fonction de la différence de potentiel V appliquée au cristal de ce sous-pixel.

9. Procédé d'affichage selon l'une quelconque des revendications 3 et 6, caractérisé en ce que l'on réalise l'affichage des (n + 1) niveaux de gris fondamentaux de chaque sous-pixel en utilisant pour la cellule un cristal liquide à n états stables de commutation.

10. Procédé d'affichage selon la revendication 7, caractérisé en ce que, pour éviter le papillotement résultant de l'affichage d'une zone de gris, on remplace les séquences de sous-trames affichant tous les sous-pixels des pixels de cette zone à l'état blanc dans une sous-trame d'ordre k et à l'état noir dans la sous-trame d'ordre k + 1, par deux sous-trames répartissant spatialement et temporellement les informations en écrivant chaque pixel à la nuance de gris recherchée au cours de deux sous-trames, par mélange des sous-pixels blancs et des sous-pixels noirs, de façon qu'un sous-pixel blanc au cours de la première sous-trame soit noir au cours de la deuxième et vice versa.

11. Ecran à cristal liquide pour l'affichage de niveaux de gris selon l'une des revendications 3 à 10 précédentes, caractérisé en ce que les sous-pixels de chaque pixel sont adressés par une seule ligne (ou colonne) et plusieurs sous-colonnes (ou sous-lignes).

12. Ecran à cristal liquide pour l'affichage de niveaux de gris selon l'une quelconque des revendications 3 à 10 précédentes, caractérisé en ce que les p sous-pixels de chaque pixel sont adressés par x sous-lignes et y sous-colonnes, avec xy = p.

13. Ecran à cristal liquide pour l'affichage de niveaux de gris selon l'une quelconque des revendications 3 à 10 précédentes, caractérisé en ce que l'un des deux types de conducteurs (sous-lignes ou sous colonnes) est modulé périodiquement en largeur, de façon à réaliser, par croisement avec les conducteurs de l'autre type (colonnes ou lignes) les différentes surfaces des p sous-pixels de chaque pixel.

FIG. 1

FIG. 2

FIG. 3

FIG. 4

FIG. 5 a

FIG. 5 b

FIG. 6 a

FIG. 6 b

FIG. 7

EP 0 379 810 A2

**FIG. 8A**

**FIG. 8B**